# EUROPEAN PATENT APPLICATION

(11) **EP 2 387 249 A1**
(43) Date of publication of application: **16.11.2011**
(21) Application number: 11165023.0
(22) Date of filing: 06.05.2011
(51) Int. Cl.: H04N 21/442, H04N 5/00

(54) **Image receiver capable of determining and presenting to the user the availabilty of enhanced services stored on a server**

(30) Priority: 10.05.2010 JP 2010107847
(71) Applicant: Funai Electric Co., Ltd., Daito-shi, Osaka 574-0013 (JP)
(72) Inventor: Okazaki, Masaki, Daito-shi Osaka 574-0013 (JP)
(74) Representative: Grünecker, Kinkeldey, Stockmair & Schwanhäusser

(57) **Abstract**

This image receiver (10) includes an image receiving portion (12), a communication portion (11) connectable to a server (1, 2, 3) providing a service (A, B, C), and a control portion (13) determining whether or not the service provided by the server is available on the basis of at least the state of connection between the communication portion and the server and posting at least the service determined as available to the user.

## Description

### BACKGROUND OF THE INVENTION

### Field of the Invention

The present invention relates to an image receiver, and more particularly, it relates to an image receiver connectable to a server providing a service through a network.

### Description of the Background Art

An image receiver connectable to a server providing a service through a network is known in general, as disclosed in Japanese Patent No. 4365401, for example.

The aforementioned Japanese Patent No. 4365401 discloses a service providing system constituted of a user terminal unit (image receiver) including a service finding portion (control portion) and a service providing unit (server) connected to the user terminal unit through a network. The aforementioned Japanese Patent No. 4365401 also discloses a communication control method for enabling the user of the user terminal unit to use services provided by the service providing unit without installing a dedicated client program in the user terminal unit. In the service providing system disclosed in Japanese Patent No. 4365401, the service finding portion of the user terminal unit is formed to create a list of available services in response to the user's request.

In the user terminal unit of the service providing system according to the aforementioned Japanese Patent No. 4365401, however, the user must request the service finding portion to create the list of the available services, in order to check available ones included in services provided through the network. In order to request the service finding portion to create the list of the available services, the user must conceivably perform a manual operation. Therefore, the user's operation for checking available ones included in the services provided through the network is disadvantageously complicated.

### SUMMARY OF THE INVENTION

The present invention has been proposed in order to solve the aforementioned problem, and an object of the present invention is to provide an image receiver capable of reducing a burden on the user's operation for checking available ones included in services provided through a network.

An image receiver according to an aspect of the present invention includes an image receiving portion receiving a television image, a communication portion connectable to a server providing a service through a network and a control portion determining whether or not the service provided by the server is available on the basis of at least the state of connection between the communication portion and the server and posting at least the service determined as available to the user.

In the image receiver according to the aspect of the present invention, as hereinabove described, the control portion is formed to post at least the service determined as available to the user, whereby the user can recognize at least the service determined as available by recognizing the service automatically posted by the control portion. Thus, the user may not perform a manual operation for requesting the control portion to create a list of available services, for example, when he/she wishes to check available services. Consequently, a burden on the user's operation for checking available ones included in services provided through the network can be reduced.

In the aforementioned image receiver according to the aspect, the control portion is preferably formed to post at least the service determined as available to the user so that he/she can visually recognize the service. According to this structure, the user can visually recognize the service posted by the control portion, whereby he/she can easily recognize the available service.

In the aforementioned image receiver according to the aspect, the server is preferably formed to provide a service distributing contents, and the control portion is preferably formed to acquire a contents list showing the contents distributed by the server through the communication portion when connection between the communication portion and the server is valid and to determine that the service provided by the server is available when acquiring the contents list. According to this structure, the control portion does not determine the service as available unless the same acquires the contents list, even if the connection between the communication portion and the server is valid. Thus, the control portion can more accurately determine whether or not the service is available, dissimilarly to a case of determining whether or not the service is available on the basis of only the state of connection between the communication portion and the server, for example.

In this case, the control portion is preferably so formed, when the server is on an external network, as to log in to the server on the external network with log-in information previously set by the user and to acquire the contents list of the server on the external network. According to this structure, the control portion does not determine the service as available unless the same can log in to the server on the external network, even if connection between the communication portion and the server on the external network is valid. Thus, the control portion can more accurately determine whether or not the service is available, dissimilarly to a case of determining whether or not the service is available on the basis of only the state of connection between the communication portion and the server on the external network, for example.

The aforementioned image receiver having the control portion acquiring the contents list when the connection between the communication portion and the server is valid preferably further includes a contents list storage portion storing the contents list acquired by the control portion. According to this structure, the contents list acquired by the control portion can be stored in the contents list storage portion. Thus, the user can use the contents list stored in the contents list storage portion when he/she wishes to use the contents list in order to utilize any available service, whereby the control portion may not re-acquire the contents list through the network. Consequently, the user can quickly use the available service.

In the aforementioned image receiver according to the aspect, the control portion is preferably formed to periodically determine whether or not the service provided by the server is available. According to this structure, the control portion periodically repeatedly determines whether or not the service provided by the server is available, whereby the user can reliably grasp the available service even if the determination as to whether or not the service is available fluctuates.

In the aforementioned image receiver according to the aspect, the control portion is preferably formed to determine whether or not connection between the communication portion and the server is valid on the basis of at least a determination as to whether or not a communication cable for communicating with the server through the network is physically connected to the communication portion. According to this structure, the control portion can easily determine whether or not the connection between the communication portion and the server is valid on the basis of the determination as to whether or not the communication cable is physically connected to the communication portion.

In this case, the control portion is preferably formed to determine that connection between the communication portion and the server is valid when determining that the communication cable is physically connected to the communication portion and that the communication portion and the server are capable of communicating with each other through the communication cable. According to this structure, the control portion can accurately determine whether or not the connection between the communication portion and the server is valid in consideration of not only the determination as to whether or not the communication cable is physically connected to the communication portion but also the determination as to whether or not the communication portion and the server are capable of communicating with each other through the communication cable.

In the aforementioned image receiver according to the aspect, the service preferably includes a plurality of services, and the control portion is preferably formed to post the service determined as available and the service determined as unavailable to the user so that the user can visually recognize the service determined as available and the service determined as unavailable. According to this structure, the user can easily recognize not only the available service but also the unavailable service by visually recognizing the services posted by the control portion.

In this case, the image receiver preferably further includes a contents display portion capable of reproducing the contents, and the control portion is preferably formed to post the service determined as available and the service determined as unavailable to the user so that the user can visually recognize the service determined as available and the service determined as unavailable by controlling the contents display portion to display a determination result display screen listing the plurality of services so that the user can visually identify whether or not the plurality of services have been determined as available respectively. According to this structure, the user can easily recognize available and unavailable ones included the plurality of services by observing the determination result display screen.

In the aforementioned image receiver including the contents display portion displaying the determination result display screen, the control portion is preferably formed to control the contents display portion to relatively brightly display the service determined as available on the determination result display screen and to relatively darkly display the service determined as unavailable on the determination result display screen. According to this structure, the contents display portion conspicuously displays the service determined as available on the determination result display screen while inconspicuously displaying the service determined as unavailable on the determination result display screen, whereby the user can clearly visually recognize the services determined as available and unavailable respectively.

In the aforementioned image receiver including the contents display portion displaying the determination result display screen, the contents display portion capable of reproducing the contents preferably includes an image display portion capable of displaying the television image received by the image receiving portion. According to this structure, the image receiver can make the user visually recognize the available and unavailable services in a simple structure, dissimilarly to a case where the contents display portion and the image display portion are provided separately from each other.

In this case, the control portion is preferably formed to control the contents display portion to display the determination result display screen in a prescribed region of the image display portion. According to this structure, the determination result display screen can be inhibited from hindering the television image when the same is displayed on the image display portion.

The aforementioned image receiver having the control portion posting the service determined as available and the service determined as unavailable to the user so that the user can visually recognize the service determined as available and the service determined as unavailable preferably further includes a plurality of light-emitting portions corresponding to the plurality of services respectively, and the control portion is preferably formed to post the service determined as available and the service determined as unavailable to the user so that the user can visually recognize the service determined as available and the service determined as unavailable by turning on or blinking the light-emitting portion corresponding to the service determined as available among the plurality of light-emitting portions. According to this structure, the user can easily recognize available and unavailable ones included in the plurality of services by observing which one of the plurality of light-emitting portions is turned on or blinked.

In this case, the control portion is preferably formed to turn on or blink the light-emitting portion corresponding to the service determined as available while neither turning on nor blinking the light-emitting portion corresponding to the service determined as unavailable. According to this structure, the user can clearly visually recognize the services determined as available and unavailable respectively by observing which one of the plurality of light-emitting portions is turned on or blinked.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram showing the structure of a television set according to a first embodiment of the present invention;
Fig. 2 is a flow chart for illustrating a control operation of a control portion for posting available and unavailable services to the user of the television set according to the first embodiment of the present invention;
Fig. 3 illustrates a state of the television set according to the first embodiment of the present invention posting the available and unavailable services to the user;
Fig. 4 is a block diagram showing the structure of a settop box according to a second embodiment of the present invention;
Fig. 5 is a flow chart for illustrating a control operation of a control portion for posting available and unavailable services to the user of the settop box according to the second embodiment of the present invention; and
Fig. 6 illustrates a state of the settop box according to the second embodiment of the present invention posting the available and unavailable services to the user.

### DESCRIPTION OF THE PREFERRED EMBODIMENTS

Embodiments of the present invention are now described with reference to the drawings.

### (First Embodiment)

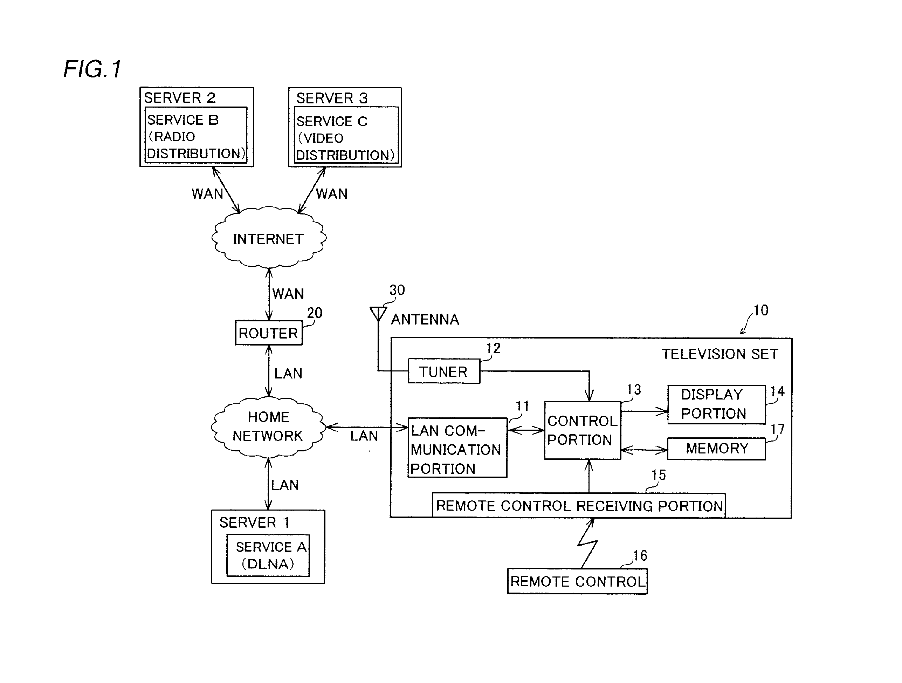

First, the structure of a television set 10 according to a first embodiment of the present invention is described with reference to Fig. 1. The television set 10 is an example of the "image receiver" in the present invention.

The television set 10 is constituted of a LAN (local area network) communication portion 11, a tuner 12, a control portion 13, a display portion 14, a remote control receiving portion 15, a remote control 16 and a memory 17, as shown in Fig. 1. The tuner 12 is an example of the "image receiving portion" in the present invention. The LAN communication portion 11 is an example of the "communication portion" in the present invention. The display portion 14 is an example of the "contents display portion" or the "image display portion" in the present invention. The memory 17 is an example of the "contents list storage portion" in the present invention.

The LAN communication portion 11 is so formed that a communication cable (LAN cable) for communicating with servers 1, 2 and 3 through networks (home network and the Internet) can be physically connected thereto. Thus, the LAN communication portion 11 is formed to be connectable to the server 1 through the home network formed by a LAN or the like. Further, the LAN communication portion 11 is formed to be connectable to the servers 2 and 3 through the Internet formed by a WAN (wide area network) or the like. The servers 1, 2 and 3 are formed to provide services A, B and C distributing contents respectively. For example, the server 1 is a digital media server, corresponding to DLNA (digital living network alliance), providing the service A distributing the contents through the home network. The server 2 provides the service B distributing radio sounds through the Internet, and the server 3 provides the service C distributing videos through the Internet.

The tuner 12 is formed to receive television broadcasting (images) through an antenna 30. The control portion 13 is formed to control the overall television set 10 by transmitting control signals thereby controlling contents displayed on the display portion 14, for example. The display portion 14 is formed to be capable of displaying the television broadcasting (images) received by the tuner 12. The display portion 14 is formed to be capable of reproducing the contents distributed by the servers 1 to 3 and received by the LAN communication portion 11.

The remote control receiving portion 15 is formed to receive operation signals from the remote control 16. The remote control receiving portion 15 is connected to the control portion 13. Thus, the user can control the overall television set 10 by operating the remote control 16. For example, the user can make the display portion 14 reproduce the contents distributed by the servers 1 to 3 and received by the LAN communication portion 11 by operating the remote control 16.

According to the first embodiment, the control portion 13 is formed to determine whether or not the services A to C provided by the servers 1 to 3 are available on the basis of at least the state of connection between the LAN communication portion 11 and the servers 1 to 3. More specifically, the control portion 13 is formed to determine whether or not the LAN cable is physically connected to the LAN communication portion 11 and to determine whether or not the LAN communication portion 11 and the servers 1 to 3 are capable of communicating with each other through the LAN cable. The control portion 13 is formed to determine that the connection between the LAN communication portion 11 and the servers 1 to 3 is valid when determining that the LAN cable is physically connected to the LAN communication portion 11 and that the LAN communication portion 11 and the servers 1 to 3 are capable of communicating with each other through the LAN cable.

The control portion 13 is formed to acquire contents lists showing the contents distributed by the servers 1 to 3 through the LAN communication portion 11 when the connection between the LAN communication portion 11 and the servers 1 to 3 is valid, and to determine that the services A to C provided by the servers 1 to 3 respectively are available when acquiring the contents lists. In other words, the control portion 13 determines that the services A to C provided by the servers 1 to 3 connected to the LAN communication portion 11 respectively are unavailable unless the same acquires the contents lists, even if the connection between the LAN communication portion 11 and the servers 1 to 3 is valid. When the control portion 13 requires log-in information described later for acquiring the contents lists of the servers 2 and 3 on the Internet but cannot log in to the servers 2 and 3 since the user has not previously set the log-in information, for example, the contents lists of the servers 2 and 3 are not acquirable even if the connection between the LAN communication portion 11 and the servers 1 to 3 is valid, and hence the control portion 13 determines that the services B and C are unavailable.

The control portion 13 is formed to log in to the servers 2 and 2 on an external network (the Internet) with log-in information previously set by the user and to acquire the contents lists of the servers 2 and 3. The log-in information consists of a user name and a password, for example. The user can previously set the user name and the password and store the same in the television set 10.

The control portion 13 is formed to periodically determine whether or not the services A to C provided by the servers 1 to 3 respectively are available. In other words, the control portion 13 is formed to repeat confirmation of the state of connection between the LAN communication portion 11 and the servers 1 to 3 and acquisition of the contents lists of the validly connected servers 1 to 3. The memory 17 is formed to store the contents lists acquired by the control portion 13. In other words, the contents lists stored in the memory 17 are updated to the newest ones at intervals of one minute, for example.

The control portion 13 is formed to post at least a service (service A, for example) determined as available to the user. According to the first embodiment, the control portion 13 posts not only the service (service A, for example) determined as available but also services (services B and C, for example) determined as unavailable to the user so that he/she can visually recognize the services determined as available and unavailable respectively.

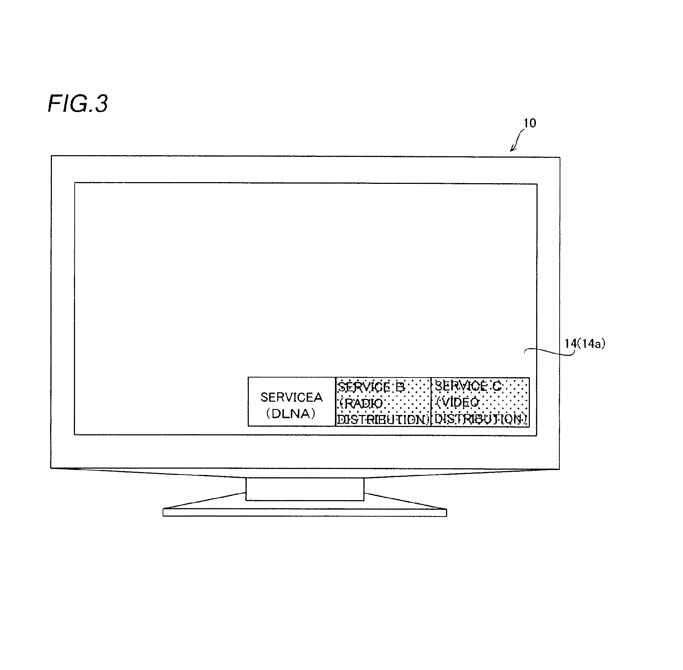

The control portion 13 is formed to control the display portion 14 to display a determination result display screen 14a (see Fig. 3) listing the three services A to C so that the user can visually identify whether or not the same have been determined as available, thereby posting the service (service A, for example) determined as available and the services (services B and C, for example) determined as unavailable to the user so that he/she can visually recognize the services determined as available and unavailable respectively. More specifically, the control portion 13 controls the display portion 14 to display the determination result display screen 14a relatively brightly displaying the service A (DLNA) while relatively darkly displaying the service B (radio distribution) and the service C (video distribution) as shown in Fig. 3, when determining that the service A (DLNA) as available while determining the service B (radio distribution) and the service C (video distribution) as unavailable. In this case, the user can visually recognize that the relatively brightly displayed service A (DLNA) is available and the relatively darkly displayed services B and C (radio distribution and video distribution) are unavailable by observing the determination result display screen 14a (see Fig. 3). The control portion 13 is formed to control the display portion 14 to display the determination result display screen 14a in a prescribed region (lower right portion of the display portion 14 in Fig. 3) thereof, as shown in Fig. 3.

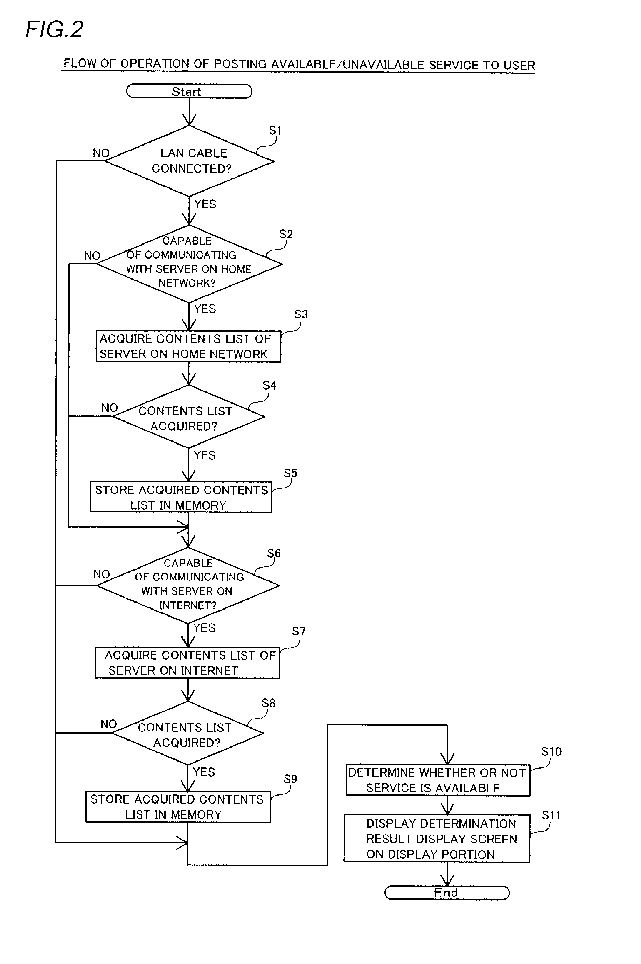

The control operation of the control portion 13 posting the available and unavailable services to the user of the television set 10 according to the first embodiment of the present invention is now described with reference to Figs. 2 and 3.

As shown in Fig. 2, the control portion 13 first determines whether or not the LAN cable is physically connected to the LAN communication portion 11 at a step S1. The control portion 13 determines whether or not the LAN cable is physically connected to the LAN communication portion 11 by acquiring the state of connection of the LAN cable from a LAN controller of the LAN communication portion 11, for example. If determining that the LAN cable is physically connected to the LAN communication portion 11 at the step S1, the control portion 13 advances to a step S2. If determining that the LAN cable is not physically connected to the LAN communication portion 11 at the step S1, on the other hand, the control portion 13 advances to a step 510.

At the step S2, the control portion 13 determines whether or not the LAN communication portion 11 is capable of communicating with the server 1 on the home network. The control portion 13 determines whether or not the LAN communication portion 11 is capable of communicating with the server 1 by determining whether or not an IP (Internet protocol) address allocated to the television set 10 is invalid, for example. If the IP address allocated to the television set 10 is invalid, the control portion 13 determines that the LAN communication portion 11 is incapable of communicating with the server 1. An invalid IP address is "0.0.0.0" or "255.255.255.255", for example.

If determining that the LAN communication portion 11 is capable of communicating with the server 1 at the step S2, the control portion 13 advances to a step S3. If determining that the LAN communication portion 11 is incapable of communicating with the server 1 at the step S2, on the other hand, the control portion 13 advances to a step S6. The control portion 13 confirms whether or not the connection between the LAN communication portion 11 and the server 1 is valid through the aforementioned steps S1 and S2.

Then, the control portion 13 acquires the contents list of the server 1 at the step S3, and advances to a step S4. Then, the control portion 13 determines whether or not the contents list of the server 1 has been acquired at the step S4. If determining that the contents list of the server 1 has been acquired at the step S4, the control portion 13 advances to a step S5. Then, the control portion 13 controls the memory 17 to store the acquired contents list of the server 1 at the step S5. Then, the control portion 13 advances to the step S6. The control portion 13 also advances to the step S6 when determining that the contents list of the server 1 has not been acquired at the step S4.

Then, the control portion 13 determines whether or not the LAN communication portion 11 is capable of communicating with the servers 2 and 3 on the Internet at the step S6. The control portion 13 determines whether or not the LAN communication portion 11 is capable of communicating with the servers 2 and 3 by transmitting a ping packet to a DNS (domain name system) server or a proxy server previously set in the television set 10 and confirming the returned packet, for example. If determining that the LAN communication portion 11 is capable of communicating with the servers 2 and 3 at the step S6, the control portion 13 advances to a step S7. The control portion 13 confirms whether or not the connection between the LAN communication portion 11 and the servers 2 and 3 is valid through the step S6 and the aforementioned step S1.

Then, the control portion 13 acquires the contents lists of the servers 2 and 3 at the step S7, and advances to a step S8. Then, the control portion 13 determines whether or not the contents lists of the servers 2 and 3 have been acquired at the step S8. If requiring log-in in order to acquire the contents lists of the servers 2 and 3, the control portion 13 automatically logs in to the servers 2 and 3 with the log-in information previously set by the user. If determining that the contents lists of the servers 2 and 3 have been acquired at the step S8, the control portion 13 advances to a step S9. Then, the control portion 13 controls the memory 17 to store the acquired contents lists of the servers 2 and 3 at the step S9. Then, the control portion 13 advances to the step 510. The control portion 13 also advances to the step S10 when determining that the LAN communication portion 11 is incapable of communicating with the servers 2 and 3 at the aforementioned step S6 and determining that the contents lists of the servers 2 and 3 have not been acquired at the aforementioned step S8.

Then, the control portion 13 determines whether or not the services A to C provided by the servers 1 to 3 respectively are available at the step S10 on the basis of the results of the steps S1 to S9, and advances to a step S11. At the step S10, the control portion 13 determines that the services A to C are available if the connection between the LAN communication portion 11 and the servers 1 to 3 is valid and the contents lists of the validly connected servers 1 to 3 have been acquired. On the other hand, the control portion 13 determines that the services A to C are unavailable at the step S10 if the connection between the LAN communication portion 11 and the servers 1 to 3 is invalid or the connection between the LAN communication portion 11 and the servers 1 to 3 is valid but the contents lists of the validly connected servers 1 to 3 have not been acquired.

At the step S11, the control portion 13 controls the display portion 14 to display the determination result display screen 14a (see Fig. 3) displaying the results of the determination at the step S10, and terminates the control operation. The determination result display screen 14a displays the services determined as available and unavailable respectively. If the control portion 13 determines that the service A (DLNA) is available while determining that the service B (radio distribution) and the service C (video distribution) are unavailable at the step S10, for example, the display portion 14 displays the determination result display screen 14a relatively brightly displaying the service A (DLNA) while relatively darkly displaying the service B (radio distribution) and the service C (video distribution), as shown in Fig. 3. Thus, the control portion 13 posts the available and unavailable services to the user. The control portion 13 periodically repeats the control operation at the aforementioned steps S1 to S11 at intervals of one minute, for example.

According to the first embodiment, as hereinabove described, the control portion 13 is formed to post at least the service (service A, for example) determined as available to the user. Thus, the user can recognize at least the service (service A, for example) determined as available by recognizing the service (service A, for example) automatically posted by the control portion 13. Consequently, the user may not perform a manual operation for requesting the control portion 13 to create a list of available services, for example, when he/she wishes to check available services. In other words, a burden on the user can be reduced when he/she checks the available service (service A, for example) included in the services A to C provided through the networks (home network and the Internet).

According to the first embodiment, as hereinabove described, the control portion 13 is formed to post at least the service (service A, for example) determined as available to the user so that he/she can visually recognize the available service. Thus, the user can visually recognize the service (service A, for example) posted by the control portion 13, whereby he/she can easily recognize the available service (service A, for example).

According to the first embodiment, as hereinabove described, the control portion 13 is formed to acquire the contents lists showing the contents distributed by the servers 1 to 3 through the LAN communication portion 11 when the connection between the LAN communication portion 11 and the servers 1 to 3 is valid and to determine that the services A to C provided by the servers 1 to 3 respectively are available when acquiring the contents lists. Thus, the control portion 13 does not determine the services A to C as available unless the same acquires the contents lists, even if the connection between the LAN communication portion 11 and the servers 1 to 3 is valid. Consequently, the control portion 13 can more accurately determine whether or not the services A to C are available, dissimilarly to a case of determining whether or not the services A to C are available on the basis of only the state of connection between the LAN communication portion 11 and the servers 1 to 3.

According to the first embodiment, as hereinabove described, the control portion 13 is formed to log in to the servers 2 and 3 on the Internet with the log-in information previously set by the user and to acquire the contents lists of the servers 2 and 3. Thus, the control portion 13 does not determine the services B and C as available unless the same can log in to the servers 2 and 3, even if the connection between the LAN communication portion 11 and the servers 2 and 3 is valid. Consequently, the control portion 13 can more accurately determine whether or not the services B and C are available, dissimilarly to a case of determining whether or not the services B and C are available on the basis of only the state of connection between the LAN communication portion 11 and the servers 2 and 3.

According to the first embodiment, as hereinabove described, the television set 10 is provided with the memory 17 storing the contents lists acquired by the control portion 13. Thus, the contents lists acquired by the control portion 13 can be stored in the memory 17. Consequently, the user can use the contents lists stored in the memory 17 when he/she wishes to use the contents lists in order to utilize any available service, whereby the control portion 13 may not reacquire the contents lists through the networks. In other words, the user can immediately utilize the available services A to C.

According to the first embodiment, as hereinabove described, the control portion 13 is formed to periodically determine whether or not the services A to C provided by the servers 1 to 3 respectively are available. Thus, the control portion 13 periodically repeats the determination as to whether or not the services A to C provided by the servers 1 to 3 respectively are available, whereby the user can reliably grasp the available services A to C even if the states of the services A to C provided by the servers 1 to 3 respectively fluctuate due to fluctuation of the state of connection between the LAN communication portion 11 and the servers 1 to 3, for example.

According to the first embodiment, as hereinabove described, the control portion 13 is formed to determine that the connection between the LAN communication portion 11 and the servers 1 to 3 is valid when determining that the LAN cable for communicating with the servers 1 to 3 through the networks (home network and the Internet) is physically connected to the LAN communication portion 11. Thus, the control portion 13 can easily determine whether or not the connection between the LAN communication portion 11 and the servers 1 to 3 is valid on the basis of the determination as to whether or not the LAN cable is physically connected to the LAN communication portion 11.

According to the first embodiment, as hereinabove described, the control portion 13 is formed to determine that the connection between the LAN communication portion 11 and the servers 1 to 3 is valid when determining that the LAN cable is physically connected to the LAN communication portion 11 and that the LAN communication portion 11 and the servers 1 to 3 are capable of communicating with each other through the LAN cable. Thus, the control portion 13 can accurately determine whether or not the connection between the LAN communication portion 11 and the servers 1 to 3 is valid in consideration of not only the determination as to whether or not the LAN cable is physically connected to the LAN communication portion 11 but also the determination as to whether or not the LAN communication portion 11 and the servers 1 to 3 are capable of communicating with each other through the LAN cable.

According to the first embodiment, as hereinabove described, the control portion 13 is formed to post the service (service A, for example) determined as available and the services (services B and C, for example) determined as unavailable to the user so that he/she can visually recognize the services determined as available and unavailable respectively. Thus, the user can easily recognize not only the available service (service A, for example) but also the unavailable services (services B and C, for example) by visually recognizing the services A to C posted by the control portion 13.

According to the first embodiment, as hereinabove described, the television set 10 is provided with the display portion 14 capable of reproducing contents and the control portion 13 is formed to post the service (service A, for example) determined as available and the services (services B and C, for example) determined as unavailable to the user so that he/she can visually recognize the available and unavailable services by controlling the display portion 14 to display the determination result display screen 14a listing the three services A to C so that the user can visually identify whether or not the same have been determined as available respectively. Thus, the user can easily recognize the available and unavailable ones included in the three services A to C.

According to the first embodiment, as hereinabove described, the control portion 13 is formed to control the display portion 14 to relatively brightly display the service (service A, for example) determined as available on the determination result display screen 14a and to relatively darkly display the services (services B and C, for example) determined as unavailable on the determination result display screen 14a. Thus, the display portion 14 conspicuously displays the service determined as available on the determination result display screen 14a while inconspicuously displaying the services determined as unavailable on the determination result display screen 14a, whereby the user can clearly visually recognize the services determined as available and unavailable respectively.

According to the first embodiment, as hereinabove described, the control portion 13 is formed to display the determination result display screen 14a in the prescribed region (lower right portion of the display portion 14 in Fig. 3, for example) of the display portion 14. Thus, the determination result display screen 14a can be inhibited from hindering television images when the same are displayed on the display portion 14.

### (Second Embodiment)

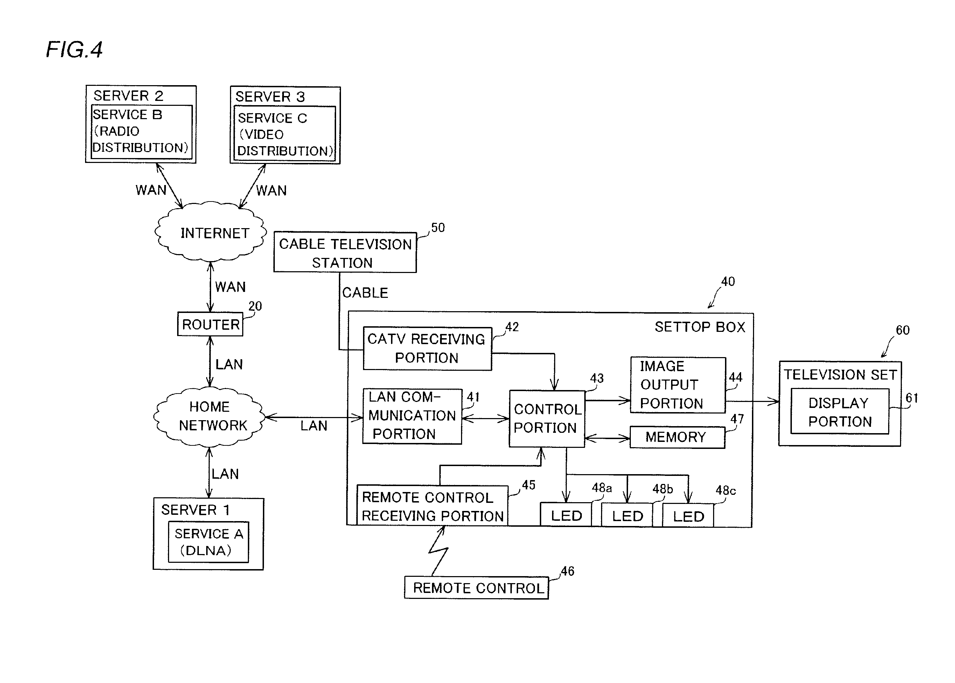

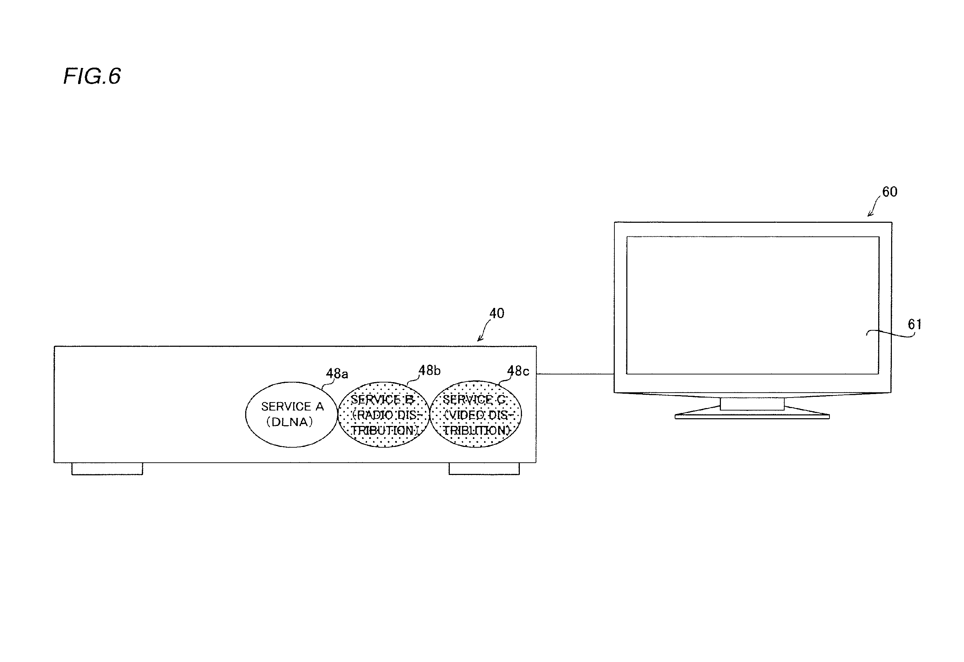

The structure of a settop box 40 according to a second embodiment of the present invention is now described with reference to Fig. 4. In the settop box 40 according to the second embodiment, a control portion 43 is formed to post whether or not three services A to C provided by servers 1 to 3 respectively are available to the user with three LEDs (light-emitting diodes) 48a to 48c (see Fig. 6) corresponding to the three services A to C respectively, dissimilarly to the first embodiment in which the control portion 13 is formed to post whether or not the services A to C provided by the servers 1 to 3 respectively are available to the user with the determination result display screen 14a (see Fig. 3).

The settop box 40 is constituted of a LAN communication portion 41, a CATV (community antenna television) receiving portion 42, the control portion 43, an image output portion 44, a remote control receiving portion 45, a remote control 46, a memory 47 and the three LEDs 48a, 48b and 48c, as shown in Fig. 4. The LAN communication portion 41 is an example of the "communication portion" in the present invention, and the memory 47 is an example of the "contents list storage portion" in the present invention. The LEDs 48a to 48c are examples of the "light-emitting portions" in the present invention.

The LAN communication portion 41 is formed to be connectable to the server 1 through a home network, similarly to the LAN communication portion 11 of the television set 10 according to the aforementioned first embodiment. Further, the LAN communication portion 40 is formed to be connectable to the servers 2 and 3 through the home network, a router 20 and the Internet. The servers 1 to 3 are similar in structure to those in the aforementioned first embodiment.

The CATV receiving portion 42 is formed to receive television broadcasting transmitted from a cable television station 50 through a cable. The control portion 43 is formed to control the overall settop box 40 by transmitting control signals. The control portion 43 is connected to a television set 60 through the image output portion 44. The television set 60 has a display portion 61. Thus, the control portion 43 can control display contents on the display portion 61 of the television set 60. For example, the control portion 43 can control the display portion 61 of the television set 60 to reproduce television images received by the CATV receiving portion 42 or contents received by the LAN communication portion 41.

The remote control receiving portion 45 is formed to receive operation signals from the remote control 46. The operation signals received by the remote control receiving portion 45 are transmitted to the control portion 43. Thus, the user can control the settop box 40 and the television set 60 by operating the remote control 46. In other words, the user can utilize the services A to C provided by the servers 1 to 3 respectively by operating the remote control 46.

According to the second embodiment, the settop box 40 is provided with the three LEDs 48a to 48c corresponding to the three services A to C respectively. The control portion 43 is formed to post a service (service A, for example) determined as available and services (services B and C, for example) determined as unavailable to the user so that he/she can visually recognize the services determined as available and unavailable respectively by turning on the LED (LED 48a, for example), corresponding to the service (service A, for example) determined as available, included in the three LEDs 48a to 48c. More specifically, the control portion 43 turns on the LED 48a corresponding to the available service A (DLNA) as shown in Fig. 6, when determining that the service A is available while determining that the services B and C are unavailable. In this case, the control portion 43 does not turn on the LEDs 48b and 48c corresponding to the unavailable service B (radio distribution) and the unavailable service C (video distribution). Thus, the user can visually recognize that the service A (DLNA) corresponding to the ON-state LED 48a is available and the services B and C (radio distribution and video distribution) corresponding to the OFF-state LEDs 48b and 48c respectively are unavailable by observing the ON- and OFF-states of the three LEDs 48a to 48c shown in Fig. 6.

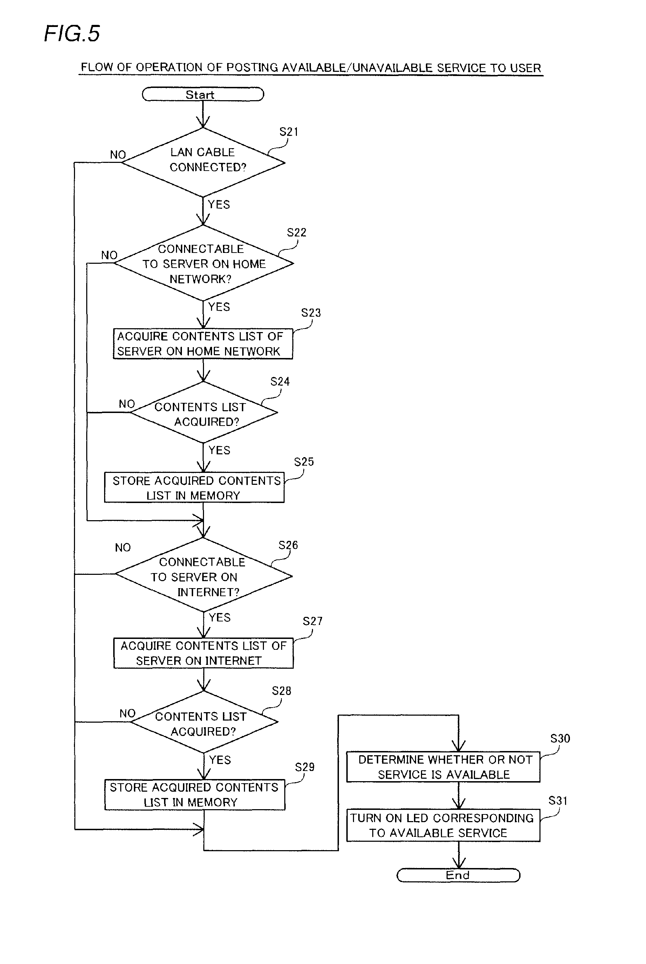

The control operation of the control portion 43 posting the available and unavailable services to the user in the settop box 40 according to the second embodiment of the present invention is now described with reference to Fig. 5. Referring to Fig. 5, steps S21 to S30 are similar to the steps S1 to S10 of the control operation of the control portion 13 in the aforementioned first embodiment shown in Fig. 2. The control portion 43 periodically repeats the steps S21 to S30 and a step S31 at intervals of one minute, for example, similarly to the control portion 13 in the aforementioned first embodiment. The step S31 is now described.

At the step S31, the control portion 43 turns on the LED corresponding to the service determined as available at the step S30 and terminates the control operation, as shown in Fig. 5. At the step S31, the control portion 43 does not turn on the LEDs corresponding to the services determined as unavailable at the step S30. When determining that the service A (DLNA) is available while determining that the services B and C (radio distribution and video distribution) are unavailable at the step S30, for example, the control portion 43 turns on only the LED 48a corresponding to the service A (DLNA), as shown in Fig. 6. In this case, the control portion 43 does not turn on the LEDs 48b and 48c corresponding to the services B and C (radio distribution and video distribution) respectively. Thus, the control portion 43 posts the available and unavailable services to the user.

According to the second embodiment, as hereinabove described, the settop box 40 is provided with the three LEDs 48a to 48c corresponding to the three services A to C respectively and the control portion 43 is formed to post the service (service A, for example) determined as available and the services (services B and C, for example) determined as unavailable to the user so that he/she can visually recognize the services determined as available and unavailable respectively by turning on the LED (LED 48a, for example) corresponding to the service (service A, for example) determined as available. Thus, the user can easily recognize available and unavailable ones included in the three services A to C by observing the ON- and OFF-states of the three LEDs 48a to 48c.

According to the second embodiment, as hereinabove described, the control portion 43 is formed to turn on the LED (LED 48a, for example) corresponding to the service (service A, for example) determined as available and not to turn on the LEDs (LEDs 48b and 48c, for example) corresponding to the services (services B and C, for example) determined as unavailable. Thus, the user can clearly visually recognize the services determined as available and unavailable respectively by observing the ON- and OFF-states of the three LEDs 48a to 48c.

Although the present invention has been described and illustrated in detail, it is clearly understood that the same is by way of illustration and example only and is not to be taken by way of limitation, the spirit and scope of the present invention being limited only by the terms of the appended claims.

For example, while the aforementioned first and second embodiments are applied to the television set and the settop box each having the control portion posting the available and unavailable services to the user, the present invention is not restricted to this. According to the present invention, the control portion of each of the television set and the settop box may alternatively post only the available service to the user.

While the aforementioned first and second embodiments are applied to the television set and the settop box each having the control portion posting the available service to the user so that he/she can visually recognize the same, the present invention is not restricted to this. According to the present invention, the control portion of each of the television set and the settop box may alternatively post the available service to the user with a sound.

While the aforementioned first and second embodiments are applied to the television set and the settop box each having the control portion determining the service(s) as available when confirming that the connection between the LAN communication portion and the servers is valid while confirming acquisition of the contents lists, the present invention is not restricted to this. According to the present invention, the control portion of each of the television set and the settop box may alternatively determine the service(s) as available only when confirming that the connection between the LAN communication portion and the servers is valid.

While the control portion of the television set posts the available service to the user by controlling the display portion to display the determination result display screen displaying the available and unavailable services in the aforementioned first embodiment, the present invention is not restricted to this. According to the present invention, the television set may be provided with LEDs corresponding to the services respectively so that the control portion posts the available service to the user by turning on the LED corresponding thereto.

While the television set has the control portion controlling the display portion, capable of reproducing contents, to display the determination result display screen in the aforementioned first embodiment, the present invention is not restricted to this. According to the present invention, the television set may be provided with a dedicated display portion for displaying the determination result display screen independently of the display portion capable of reproducing contents, so that the dedicated display portion displays the determination result display screen.

While the settop box includes the LEDs corresponding to the services respectively so that the control portion posts the available service to the user by turning on the LED corresponding thereto in the aforementioned second embodiment, the present invention is not restricted to this. According to the present invention, the settop box may be provided with a dedicated display portion for displaying a determination result display screen similar to that in the aforementioned first embodiment, so that the control portion posts the available service to the user by controlling the dedicated display portion to display the determination result display screen.

While the control portion of the settop box posts the available service to the user by turning on the LED corresponding thereto in the aforementioned second embodiment, the present invention is not restricted to this. According to the present invention, the control portion of the settop box may alternatively post the available service to the user by blinking the LED corresponding thereto.

While the user of the settop box can utilize the available service by operating the remote control in the aforementioned second embodiment, the present invention is not restricted to this. According to the present invention, the LEDs of the settop box may alternatively be formed to have functions as buttons for allowing the user to utilize the corresponding services, so that the user can utilize the available service by pressing the button consisting of the ON-state LED.

While the television set and the settop box are employed as examples of the image receiver according to the present invention in the aforementioned first and second embodiments, the present invention is not restricted to this. For example, a recorder having a tuner may alternatively be employed as the image receiver according to the present invention.

## Claims

1. An image receiver (10, 40) comprising:
an image receiving portion (12, 42) receiving a television image;
a communication portion (11, 41) connectable to a server (1, 2, 3) providing a service (A, B, C) through a network; and
a control portion (13, 43) determining whether or not said service provided by said server is available on the basis of at least the state of connection between said communication portion and said server and posting at least said service determined as available to the user.

2. The image receiver according to claim 1, wherein said control portion is formed to post at least said service determined as available to the user so that he/she can visually recognize said service.

3. The image receiver according to claim 1, wherein said server is formed to provide a service distributing contents, and
said control portion is formed to acquire a contents list showing said contents distributed by said server through said communication portion when connection between said communication portion and said server is valid and to determine that said service provided by said server is available when acquiring said contents list.

4. The image receiver according to claim 3, wherein said control portion is so formed, when said server is on an external network, as to log in to said server on said external network with log-in information previously set by the user and to acquire said contents list of said server on said external network.

5. The image receiver according to claim 3, further comprising a contents list storage portion (17, 47) storing said contents list acquired by said control portion.

6. The image receiver according to claim 1, wherein said control portion is formed to periodically determine whether or not said service provided by said server is available.

7. The image receiver according to claim 1, wherein said control portion is formed to determine whether or not connection between said communication portion and said server is valid on the basis of at least a determination as to whether or not a communication cable for communicating with said server through said network is physically connected to said communication portion.

8. The image receiver according to claim 7, wherein said control portion is formed to determine that connection between said communication portion and said server is valid when determining that said communication cable is physically connected to said communication portion and that said communication portion and said server are capable of communicating with each other through said communication cable.

9. The image receiver according to claim 1, wherein said service includes a plurality of services, and said control portion is formed to post said service determined as available and said service determined as unavailable to the user so that the user can visually recognize said service determined as available and said service determined as unavailable.

10. The image receiver according to claim 9, further comprising a contents display portion (14) capable of reproducing said contents, wherein
said control portion is formed to post said service determined as available and said service determined as unavailable to the user so that the user can visually recognize said service determined as available and said service determined as unavailable by controlling said contents display portion to display a determination result display screen (14a) listing said plurality of services so that the user can visually identify whether or not said plurality of services have been determined as available respectively.

11. The image receiver according to claim 10, wherein said control portion is formed to control said contents display portion to relatively brightly display said service determined as available on said determination result display screen and to relatively darkly display said service determined as unavailable on said determination result display screen.

12. The image receiver according to claim 10, wherein said contents display portion capable of reproducing said contents includes an image display portion (14) capable of displaying said television image received by said image receiving portion.

13. The image receiver according to claim 12, wherein
said control portion is formed to control said contents display portion to display said determination result display screen in a prescribed region of said image display portion.

14. The image receiver according to claim 10, further comprising a plurality of light-emitting portions (58a, 58b, 58c) corresponding to said plurality of services respectively, wherein
said control portion is formed to post said service determined as available and said service determined as unavailable to the user so that the user can visually recognize said service determined as available and said service determined as unavailable by turning on or blinking said light-emitting portion corresponding to said service determined as available among said plurality of light-emitting portions.

15. The image receiver according to claim 14, wherein said control portion is formed to turn on or blink said light-emitting portion corresponding to said service determined as available while neither turning on nor blinking said light-emitting portion corresponding to said service determined as unavailable.
